Europäisches Patentamt

European Patent Office

Office européen des brevets

(19)

(11) Veröffentlichungsnummer : **0 186 738**
**B1**

(12) # EUROPÄISCHE PATENTSCHRIFT

(45) Veröffentlichungstag der Patentschrift :
17.05.89

(21) Anmeldenummer : 85112647.4

(22) Anmeldetag : 05.10.85

(51) Int. Cl.⁴ : **D 21 B   1/34**

(54) Sortierapparat für Fasersuspensionen.

(30) Priorität : 02.11.84 DE 3440005

(43) Veröffentlichungstag der Anmeldung :
09.07.86 Patentblatt 86/28

(45) Bekanntmachung des Hinweises auf die Patenterteilung : 17.05.89 Patentblatt 89/20

(84) Benannte Vertragsstaaten :
AT CH DE FR GB IT LI NL

(56) Entgegenhaltungen :
DD--A--   151 641
DE--A-- 3 311 082
DE--A-- 3 334 448

(73) Patentinhaber : **J.M. Voith GmbH**
**Postfach 1940 St. Pöltener Strasse 43**
**D-7920 Heidenheim (DE)**

(72) Erfinder : **Pfalzer, Lothar, Dr.Ing.**
**Wächterstrasse 9**
**D-7920 Heidenheim (DE)**
Erfinder : **Musselmann, Walter**
**Franz-Marc-Strasse 32**
**D-7920 Heidenheim (DE)**

## Beschreibung

Die Erfindung betrifft einen Sortierapparat entsprechend dem Oberbegriff des Patentanspruchs 1. Ein solcher Sortierapparat ist bekannt aus DE-OS 33 34 448.

Der dortige Sortierapparat weist einen zum Umwälzraum koaxialen, laufradartigen Rotor auf, der vor einem Sieb angeordnet ist, das den Umwälzraum von einem Gutstoffraum trennt. Dieser Sortierapparat ist besonders für die Entsorgung eines Primärstofflösers geeignet, jedoch tritt dabei als Nachteil auf, daß nicht alle groben Verunreinigungen und insbesondere nicht Bindedrähte, die zum Zusammenhalten der Altpapierballen verwendet worden waren, abzuscheiden. Diese müssen daher vorher aus der Fasersuspension entfernt werden, am besten ehe sie in den Stofflöser gelangen. Dies erfordert jedoch höhere Aufmerksamkeit des Bedienungspersonals und verursacht höhere Kosten.

Es ist zwar durch DE-AS 26 58 845 ein als Stofflöser dienender Apparat bekannt, dessen tangential an ihn angeschlossene Einlaßleitung vom Primärstofflöser abgehen soll. Dabei ist jedoch offensichtlich daran gedacht, dem Apparat bereits · gesiebte, also vorgereinigte, groben Schwerschmutz enthaltende Suspension zuzuführen, wie bei dem Stofflöser der Anlage gemäß US 42 83 275 mit 70 mm Lochweite des groben Siebes (Spalte 3, Zeilen 43-45) möglich. Wegen des kleinen Schwerschmutzauslasses ist es hier nicht möglich, den Stofflöser zur Entsorgung des Primärstofflösers einzusetzen.

Die Aufgabe der Erfindung ist es, einen Sortierapparat anzugeben, bei dem die Entsorgung des Primärstofflösers möglich ist und bei dem Schwerschmutz grundsätzlich besser entfernt werden kann, möglichst ohne vorher Drähte und ähnliche Verschmutzungen entfernen zu müssen.

Diese Aufgabe wird erfindungsgemäß bei einem Sortierapparat der eingangs genannten Art durch die Merkmale des kennzeichnenden Teils des Patentanspruchs 1 gelöst.

Durch die vertikale Achse der sich einstellenden Rotationsströmung wird Schwerschmutz leichter am Boden des Umwälzraumes abgeschieden.

Besonders bevorzugte Ausführungsformen gehen aus den Unteransprüchen 2 und 4 hervor.

Es ist ferner von besonderem Vorteil, wenn die Einlaßleitung des Sortierapparats tangential oder nur unter einem spitzen Winkel davon abweichend vom Primärstofflöser abgeht.

Vorteilhafterweise wird die Einlaßleitung des Sortierapparats auf einem mindestens einen Durchmesser derselben niedrigeren Niveau angeschlossen als die Auslaßleitung des Sortierapparats.

Nachfolgend wird die Erfindung anhand der in den Figuren dargestellten fünf Ausführungsbeispiele erläutert. Dabei stellt

Fig. 1a die Anordnung mit dem erfindungsgemäßen Sortierapparat am Stofflöser prinzipiell in Ansicht, teils geschnitten, und

Fig. 1b die entsprechende Draufsicht und

Fig. 2-5 weitere Varianten des Sortierapparats bzw. der Anschlußmöglichkeiten desselben dar.

Der erfindungsgemäße Sortierapparat 1 weist einen kreiszylindrischen Umwälzraum 2 mit einer senkrechten Zylinderachse 30 auf, an den die Einlaßleitung 3 unterhalb seines oberen Drittels und die Auslaßleitung 4, beide im wesentlichen jeweils tangential, angeschlossen sind.

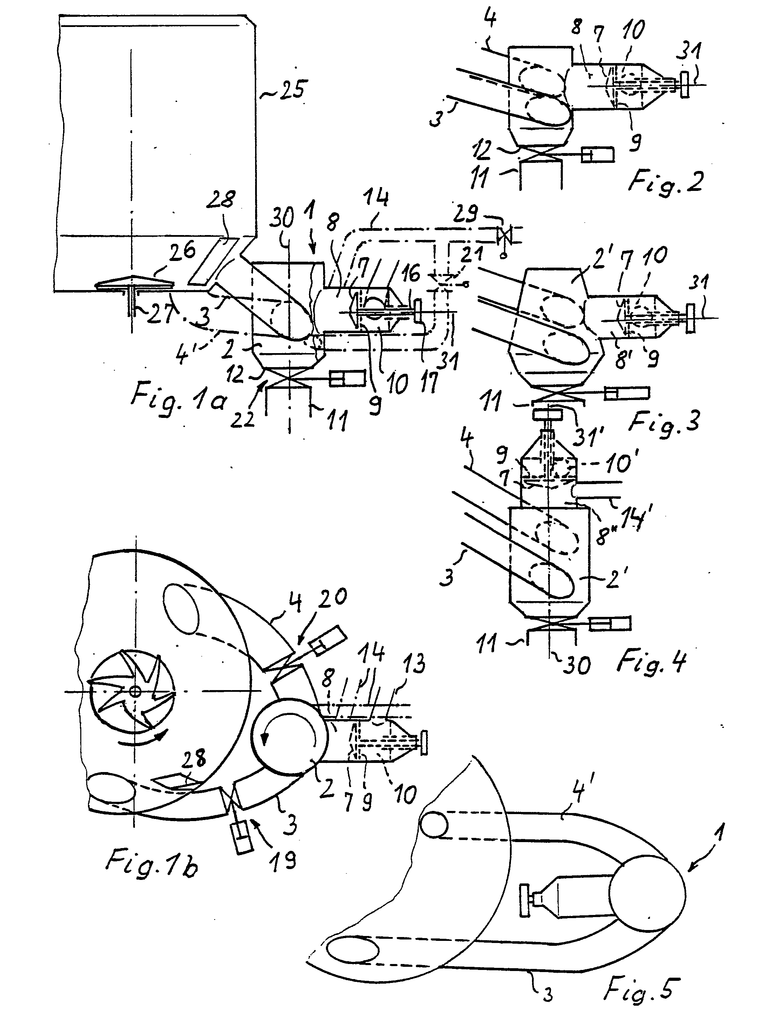

Vom Umwälzraum 2 geht ein Rotorraum 8 ab, in welchem ein laufradartiger Rotor 7 von einer Welle 16 rotierbar gehalten ist, der sich dicht neben einem im wesentlichen ebenen Sieb 9 befindet, das den Rotorraum 8 von einem Gutstoffraum 10 trennt. Vom Gutstoffraum geht eine Gutstoffleitung 13 zur Abführung des Gutstoffes ab. Es ist ferner in der Figur strichpunktiert eine Reject-Leitung angedeutet, welche aus dem Rotorraum 8 noch stark verunreinigte Fasersuspension abführt, fallweise auf eine Siebmaschine, z. B. Sortiertrommel, zur besseren Umwälzung, und vorzugsweise tangential wieder in den Umwälzraum 2 hineinführt, wie aus Fig. 1b insbesondere zu erkennen ist. Man kann dadurch die Rotationsströmung, die sich durch den tangentialen Anschluß der kurz und groß (> 300 mm) ausgeführten Einlaßleitung 3 in den Umwälzraum 2 ergibt, noch weiter verstärken. Durch die Neigung der Leitung wird auch noch zu dem Zweck das Gefälle ausgenutzt. Der Rotor 7 wird über seine Welle 16 mittels einem Riemen über Riemenscheibe 17 von einem nicht dargestellten Antrieb angetrieben. Am unteren Ende des Umwälzraumes 2, also an dessen Boden 12, ist ein Schwerschmutzauslaß 11 mit einem hydraulisch angetriebenen Auslaßschieber 22 angeordnet.

Das Volumen des Umwälzraumes beträgt im allgemeinen zwischen 5 und 15 % desjenigen des Primärstofflösers (Aufnahmevolumen für Suspension).

Damit die Suspension vom Stofflöser 25 mit ausreichender Energie in den Umwälzraum 2 gelangt, ist die Einlaßleitung 3 desselben im wesentlichen tangential von dem Primärstofflöser 25 weggeführt. Um möglichst wenig Energieverluste zu haben, geht auch die ebenfalls kurz und relativ groß ausgebildete Auslaßleitung 4 vom Umwälzraum 2 möglichst tangential ab. Es ergibt sich dadurch die im Umwälzraum 2 mit dem kreisförmigen Pfeil angedeutete Strömungsrichtung der dortigen Rotationsströmung. Vorteilhafterweise wird auch, um das radiale Druckgefälle im Primärstofflöser 25 auszunutzen, die Auslaßleitung 4 des Umwälzraumes 2 möglichst in der Nähe des Rotors 26 des Primärstofflösers 25 angeschlossen. Dabei rotiert der Rotor 26, von seiner Welle 27 angetrieben, in der in Fig. 1b · durch den Pfeil angedeuteten Richtung. In Richtung der diesem Pfeil entsprechenden Strömung geht auch die Einlaßleitung 3 des Umwälzraumes vom Stofflöser 25, und zwar ohne Zwischenschaltung eines Siebes von dessen Hauptumwälz- und Auflöseraum ab. So können auch alle groben Verunreinigungen in den Sortierapparat 1 gelangen.

Um den Umwälzraum 2 des Sortierapparats gegebenenfalls z. B. durch Spülwasser zu reinigen, sind die Einlaß- und Auslaßleitung 3 bzw. 4 jeweils durch einen hydraulisch betätigten Schieber 19 bzw. 20 absperrbar. Ebenfalls ist in der Reject-Leitung 14 ein Absperrschieber 21 vorgesehen, um gegebenenfalls ungereinigte Fasersuspension bei Öffnung des Schiebers 29 z. B. beim Waschvorgang des Umwälzraumes 2 abführen zu können.

In Fig. 2 ist der Sortierapparat nach Fig. 1 dargestellt, jedoch mit mindestens um einen Durchmesser in der Höhe versetzten Einlässen bzw. Auslässen für Einlaßleitung 3 und Auslaßleitung 4 des Umwälzraumes 2. Durch mindestens solchen Versatz wird die Rotationsströmung im Umwälzraum 2 möglichst wenig gestört. Ferner ist es dafür günstig, die Einlaßleitung 3 unterhalb des Rotorraumes 8 und aus dem Grund den Rotorraum mindestens in halber Höhe des Umwälzraumes anzuschließen.

In Fig. 3 ist eine Variante des Sortierapparats dargestellt, bei der der Umwälzraum 2' sich kegelstumpfförmig nach oben verjüngt. Dadurch wird verhindert, daß sich sperrige Metallteile, also insbesondere sehr sperrige und lange Drähte, verspreizen können, sondern sich sehr leicht in Bodennähe des Umwälzraumes 2' ansammeln. Bei größerem Anteil von feinerem Schwerschmutz, welcher durch die Wirbelströmung im Umwälzraum 2 allein nicht abgetrennt wird, empfiehlt sich die Ausführungsform nach Fig. 4. Während bei den bisherigen Ausführungsformen der Rotorraum 8 bzw. 8' seitlich am Umwälzraum angebracht war und die Rotordrehachse 31 im rechten Winkel zur Symmetrieachse 30 bzw. Zylinderachse des Umwälzraumes 2 verlief, fluchten in diesem Fall die Rotordrehachse 31' und die Zylinderachse 30, und der Rotorraum 8" befindet sich oberhalb des Umwälzraumes 2'. Dadurch kommt als weiterer Vorteil hinzu, daß der Rotor 7 die Rotationsströmung im Umwälzraum 2' direkt verstärkt. Dabei kann auch der Umwälzraum 2' absatzlos (gleiche Durchmesser) in den Rotorraum übergehen.

Bei den anderen, seitlich angeordneten Rotorräumen 8 bzw. 8' entsteht die Rotationsströmung hauptsächlich durch die tangentiale Zuführung der tangential vom Stofflöser 25 abgehenden Einlaßleitung 3 an den Umwälzraum 2. Um eine möglichst energiereiche Strömung vom Stofflöser 25 dem Umwälzraum 2 zuzuführen, kann daher ein Ablenkelement (Leiste) 28 hinter der Auslaßöffnung am Stofflöser 25 vorgesehen werden, das einen Teil des in dem Stofflöser umgewälzten Stoffstromes in die Einlaßöffnung der Einlaßleitung 3 umlenkt.

Ferner ist es vorteilhaft, wenn mann — wie in Fig. 1a dargestellt — die Einlaßleitung 3 des Umwälzraumes 2 in einem schrägen Bodenteil anschließt, so daß man den Sortierapparat 1 sehr nahe an den Stofflöser 25 heranrücken kann.

Dadurch wird die Einlaßleitung 3 besonders kurz. Sie ist im allgemeinen nicht länger als 3 m.

Bei einem hohen Anteil an feinem Schwerschmutz kann man zur besseren Abscheidung desselben noch den Rotorraum 8 bzw. 8' und den Gutstoffraum 10 auf der Seite des Umwälzraumes 2 anbringen, woer von Einlaßleitung 3 und Auslaßleitung 4 bzw. 4' gabelförmig umfaßt ist, wie es in Fig. 5 dargestellt ist.

Der Schwerschmutzauslaß 11 ist recht groß ausgeführt (etwa mit mindestens 500 mm Durchmesser), um Drahtknäuel oder ähnliches auch abführen zu können. Zur besseren Ableitung des Schwerschmutzes geht der Umwälzraum am besten konisch in den Schwerschmutzauslaß über, sofern nicht beide gleiche Durchmesser haben.

**Patentansprüche**

1. Sortierapparat (1) für verunreinigte Fasersuspensionen, insbesondere aus Altpapier mit einem im wesentlichen rotationssymmetrischen Umwälzraum (2, 2') und mit Einlaß- und Auslaßleitung (3 u. 4) und einem Schwerschmutzabzug (11) am Umwälzraum (2, 2') zur Entsorgung von Stofflösern (25), dadurch gekennzeichnet, daß

a) die Rotationssymmetrieachse (30) des Umwälzraums (2, 2') im wesentlichen vertikal oder nur unter einem kleinen spitzen Winkel von der Vertikalen abweichend angeordnet ist, wobei der gegebenenfalls kleinere Durchmesser des Umwälzraumes (2, 2') sich oben befindet,

b) an die Umfangswand des Umwälzraumes (2, 2') zur Erzeugung einer Rotationsströmung in diesem im wesentlichen um die Rotationssymmetrieachse (30) des Umwälzraumes (2, 2') mindestens die Einlaßleitung (3) des Sortierapparats (1) im wesentlichen tangential angeschlossen ist,

c) der Umwälzraum (2, 2') an einer Seite in einen Rotorbereich (8, 8', 8") übergeht, in welchem ein als Laufrad ausgebildeter Rotor (7) zur Auflösung und Siebung der Suspension und senkrecht zur Rotordrehachse ein im wesentlichen ebenes Sieb (9) zum Abzug von Gutstoff, das einen Gutstoffraum (10, 10') vom Rotorraum (8, 8', 8") trennt, angeordnet sind und

d) der Schwerschmutzauslaß (11, 22) sich am Boden (12) des Umwälzraumes (2, 2') befindet, in den dieser ohne scharfe Absätze übergeht und dessen Durchmesser mindestens halb so groß ist wie der des Umwälzraumes.

2. Sortierapparat nach Anspruch 1, dadurch gekennzeichnet, daß die Einlaßleitung (3) unterhalb des oberen Drittels des Umwälzraumes (2, 21) an diesen angeschlossen ist.

3. Sortierapparat nach Anspruch 1 oder 2, dadurch gekennzeichnet, daß auch die Auslaßleitung (4, 4') tangential, aber, entsprechend der Rotationsströmung im Umwälzraum, entgegengesetzt wie die Einlaßleitung (3) an die Umfangswand des Umwälzraumes (2, 2') angeschlossen ist.

4. Sortierapparat nach einem der Ansprüche 1 bis 3, dadurch gekennzeichnet, daß der Durchmesser des Umwälzraumes (2, 2') mindestens 50 cm beträgt.

5. Sortierapparat nach einem der Ansprüche 1 bis 4, dadurch gekennzeichnet, daß der Umwälzraum (2, 2') kreiszylindrisch oder kegelstumpfförmig ausgebildet ist.

6. Sortierapparat nach einem der Ansprüche 1 bis 5, dadurch gekennzeichnet, daß die Einlaßöffnung des Umwälzraumes (2, 2'), an dem die Einlaßleitung (3) angeschlossen ist, sich unterhalb der Auslaßöffnung des Umwälzraumes (2, 2'), an die dessen Auslaßleitung (4, 4') angeschlossen ist, und auch unterhalb dem Anschluß des Rotorraumes (8, 8') befindet.

7. Sortierapparat nach einem der Ansprüche 1 bis 6, dadurch gekennzeichnet, daß Rotorraum (8, 8', 8") und Gutstoffraum (10, 10') eine gemeinsame, rotationssymmetrische Umfangswand aufweisen.

8. Sortierapparat nach einem der Ansprüche 1 bis 7, dadurch gekennzeichnet, daß die Rotationssymmetrieachse des Umwälzraumes (2, 2') und die Rotordrehachse (31) im wesentlichen senkrecht zueinander verlaufen.

9. Sortierapparat nach einem der Ansprüche 1 bis 8, dadurch gekennzeichnet, daß die Rotationssymmetrieachse (30) des Umwälzraumes (2) und die Rotordrehachse (31') sowie der Umwälzraum (2) und ein den Rotorbereich umfassender Rotorraum (8") jeweils fluchtend zueinander angeordnet sind.

10. Sortierapparat nach einem der Ansprüche 1 bis 9, dadurch gekennzeichnet, daß eine Reject-Leitung (14) in Nähe des Laufrades (7) an den Rotorraum (8, 8', 8") angeschlossen ist, die im wesentlichen tangential wieder in den Umwälzraum (2, 2') mündet.

11. Stofflöserentsorgungssystem unter Verwendung eines Sortierapparats nach einem der Ansprüche 1 bis 10, dadurch gekennzeichnet, daß die Einlaßleitung (3) und die Auslaßleitung (4, 4') am Primärstofflöser (25) ohne Zwischenschaltung eines Siebes an dessen Hauptumwälz- und Auflöseraum angeschlossen sind.

12. Entsorgungssystem nach Anspruch 11, dadurch gekennzeichnet, daß sich die Einlaßleitung (3) am Stofflöser (25) auf einem höheren Niveau befindet als am Sortierapparat (1).

13. Entsorgungssystem nach Anspruch 11 oder 12, dadurch gekennzeichnet, daß die Einlaßleitung (3) im wesentlichen tangential oder nur mit einem spitzen Winkel davon abweichend vom Primärstofflöser (22) abgeht.

14. Entsorgungssystem nach einem der Ansprüche 11 bis 13, dadurch gekennzeichnet, daß Einlaßleitung (3) und Auslaßleitung (4, 4') am Boden oder in Bodennähe des Primärstofflösers (25) angeschlossen sind.

15. Entsorgungssystem nach Anspruch 14, dadurch gekennzeichnet, daß die Auslaßleitung (4, 4') vom Umwälzraum (2, 2') in der Nähe des Rotors (26) in den Stofflöser (25) mündet und so das radiale Druckgefälle zum Antrieb des Wirbels im Umwälzraum ausnützt (siehe Fig. 5).

16. Entsorgungssystem nach einem der Ansprüche 11 bis 15, dadurch gekennzeichnet, daß die Einlaßleitung (3) des Sortierapparats (2, 2') an diesen schräg nach unten verlaufend mit einem Winkel von mehr als 15° zur Horizontalen angeschlossen ist.

17. Entsorgungssystem nach einem der Ansprüche 11 bis 16, dadurch gekennzeichnet, daß die Einlaßleitung (3) des Sortierapparats (2, 2') mindestens einen Innendurchmesser von 280 mm hat.

## Claims

1. Screening apparatus (1) for contaminated fibrous suspensions, especially from waste paper, with an essentially rotationally symmetrical agitating chamber (2, 2') and with inlet and outlet pipe (3 and 4) and a heavy contaminants discharge (11) at the agitating chamber (2, 2') for the removal of waste from pulpers (25), characterized in that

a) the rotationally symmetrical axis (30) of the agitating chamber (2, 2') is mainly arranged vertically or only at a small acute angle deviating from the vertical, with any required smaller diameter of the agitating chamber (2, 2') located at the top,

b) connected, mainly tangentially, to the peripheral wall of the agitating chamber (2, 2') for the generation of a rotational flow in this essentially about the rotationally symmetrical axis (30) of the agitating chamber (2, 2') is at least the inlet pipe (3) of the screening apparatus (1),

c) the agitating chamber (2, 2') goes over on one side into a rotor area (8, 8', 8 »), in which are arranged a rotor (7) designed as an impeller for the slushing and screening of the suspension and perpendicular to the rotor rotational axis an essentially flat screen (9) for the discharge of accepts, which separates an accepts chamber (10, 10') from the rotor chamber (8, 8', 8") and

d) the heavy contaminants outlet (11, 22) is located at the bottom (12) of the agitating chamber (2, 2'), in which the latter goes over without sharp shoulders and whose diameter is at least half the size as that of the agitating chamber.

2. Screening apparatus according to claim 1, characterized in that the inlet pipe (3) underneath the upper third of the agitating chamber (2, 21) is connected to the latter.

3. Screening apparatus according to claim 1 or 2, characterized in that the outlet pipe (4, 4') is connected also tangentially, but, according to the rotational flow in the agitating chamber, opposite to the inlet pipe (3) connected to the peripheral wall of the agitating chamber (2, 2').

4. Screening apparatus according to one of claims 1 to 3, characterized in that the diameter of the agitating chamber (2, 2') is at least 50 cm.

5. Screening apparatus according to one of claims 1 to 4, characterized in that the agitating chamber (2, 2') is designed to be circular-cylindrical or shaped like a truncated cone.

6. Screening apparatus according to one of claims 1 to 5, characterized in that the inlet opening of the agitating chamber (2, 2') is connected to the inlet pipe (3), is connected underneath the outlet opening of the agitating chamber (2, 2') to that of its outlet pipe (4, 4'), and is also located underneath the connection of the rotor chamber (8, 8').

7. Screening apparatus according to one of claims 1 to 6, characterized in that the rotor chamber (8, 8', 8'') and accepts chamber (10, 10') exhibit a common, rotationally symmetrical peripheral wall.

8. Screening apparatus according to one of claims 1 to 7, characterized in that the rotationally symmetrical axis of the agitating chamber (2, 2') and the rotor rotational axis (31) mainly run perpendicular to each other.

9. Screening apparatus according to one of claims 1 to 8, characterized in that the rotationally symmetrical axis (30) of the agitating chamber (2) and the rotor rotational axis (31') as well as the agitating chamber (2) and a rotor chamber (8'') surrounding the rotor area are each arranged aligned with one another.

10. Screening apparatus according to one of claims 1 to 9, characterized in that a rejects pipe (14) is connected in the vicinity of the rotor (7) to the rotor chamber (8, 8', 8''), which essentially terminates tangentially again in the agitating chamber (2, 2').

11. Pulper waste removal system using a screening apparatus according to one of claims 1 to 10, characterized in that the inlet pipe (3) and the outlet pipe (4, 4') at the primary pulper (25) are connected without the interposition of a screen to its main agitating and slushing chamber.

12. Waste removal system according to claim 11, characterized in that the inlet pipe (3) at the pulper (25) is located at a higher level than at the screening apparatus (1).

13. Waste removal system according to claim 11 or 12, characterized in that the inlet pipe (3) departs mainly tangentially or only at an acute angle deviating from it from the primary pulper (22).

14. Waste removal system according to one of claims 11 to 13, characterized in that inlet pipe (3) and outlet pipe (4, 4') are connected at the bottom or close to the bottom of the primary pulper (25).

15. Waste removal system according to claim 14, characterized in that the outlet pipe (4, 4') from the agitating chamber (2, 2') connects to the pulper (25) in the vicinity of the rotor (26) and thus the radial pressure gradient is utilized in the agitating chamber to propel the vortex (see Fig. 5).

16. Waste removal system according to one of claims 11 to 15, characterized in that the inlet pipe (3) of the screening apparatus (2, 2') is connected to this in an inclined manner downwards running at an angle of more than 15° to the horizontal.

17. Waste removal system according to one of claims 11 to 16, characterized in that the inlet pipe (3) of the screening apparatus (2, 2') has at least an inside diameter of 280 mm.

## Revendications

1. Appareil de classage (1) pour suspensions de fibres contaminées, obtenues en particulier à partir de vieux papiers, avec une cuve de brassage (2, 2') pour l'essentiel à symétrie de rotation, et avec conduites d'entrée et de sortie (3 et 4) et une vidange pour contaminants lourds (11) au droit de la cuve de brassage (2, 2') pour traiter la pâte du pulper (25), caractérisé pour le fait que

a) l'axe de symétrie de rotation (30) de la cuve de brassage (2, 2') est pour l'essentiel vertical ou ne fait qu'un angle extrêmement aigu avec la verticale, le diamètre éventuellement le plus faible de la cuve de brassage (2, 2') se trouvant alors en haut.

b) au moins la conduite d'entrée (3) de l'appareil de classage (1) est raccordée pour l'essentiel tangentiellement à la paroi périphérique de la cuve de brassage (2, 2') pour générer un écoulement rotationnel dans celle-ci, essentiellement autour de l'axe de symétrie de rotation (30) de la cuve de brassage (2, 2').

c) la cuve de brassage (2, 2') présente un passage sur un côté dans une zone de rotor (8, 8', 8'') dans laquelle se trouvent un rotor 7 conçu sous forme de roue pour la trituration et le filtrage de la suspension et, perpendiculairement à l'axe de rotation du rotor, un tamis (9) essentiellement plan pour le soutirage de la bonne pâte, le tamis séparant la cuve du rotor (8, 8', 8'') d'une cuve à bonne pâte (10, 10') et

d) la sortie pour contaminants lourds (11, 22) se trouve au fond (12) de la cuve de brassage (2, 2') dans laquelle elle donne sans décrochements marqués et dont le diamètre est au moins égal à la moitié de celui de la cuve de brassage.

2. Appareil de classage suivant la revendication 1, caractérisé par le fait que la conduite d'entrée (3) est raccordée à la cuve de brassage (2, 2') au-dessous du tiers supérieur de celle-ci.

3. Appareil de classage suivant la revendication 1 ou 2, caractérisé par le fait que la conduite de sortie (4, 4') est raccordée tangentiellement à la paroi périphérique de la cuve de brassage (2, 2') mais, conformément à l'écoulement rotationnel dans la cuve de brassage, dans le sens diamétralement opposé à celui de la conduite d'entrée (3).

4. Appareil de classage conformément à l'une des revendications 1 à 3, caractérisé par le fait que le diamètre de la cuve de brassage (2, 2') est d'au moins 50 cm.

5. Appareil de classage conformément à l'une des revendications 1 à 4, caractérisé par le fait que la cuve de brassage (2, 2') est conçue cylindrique circulaire ou tronconique.

6. Appareil de classage conformément à l'une des revendications 1 à 5, caractérisé par le fait que l'ouverture d'entrée de la cuve de brassage (2, 2') à laquelle la conduite d'entrée (3) est raccordée, se trouve en dessous de l'ouverture de sortie de la cuve de brassage (2, 2') à laquelle est raccordé la conduite de sortie (4, 4') de celle-ci et également en dessous du raccord de la cuve du rotor (8, 8').

7. Appareil de classage conformément à l'une des revendications 1 à 6, caractérisé par le fait que la cuve du rotor (8, 8', 8) et la cuve de bonne pâte (10, 10') présentent une paroi périphérique commune à symétrie de rotation.

8. Appareil de classage conformément à l'une des revendications 1 à 7, caractérisé par le fait que l'axe de symétrie de rotation de la cuve de brassage (2, 2') et l'axe de rotation du rotor (31) sont essentiellement perpendiculaires l'un à l'autre.

9. Appareil de classage conformément à l'une des revendications 1 à 8, caractérisé par le fait que l'axe de symétrie de rotation (30) de la cuve de brassage (2) et l'axe de rotation du rotor (31') ainsi que la cuve de brassage (2) et une cuve de rotor (8'') englobant la roue du rotor sont chacun alignés les uns par rapport aux autres.

10. Appareil de classage conformément à l'une des revendications 1 à 8, caractérisé par le fait qu'une conduite à refus (14) est raccordée à la cuve du rotor (8, 8', 8''), laquelle débouche de nouveau de façon essentiellement tangente dans la cuve de brassage (2, 2').

11. Système de décontamination de pulper mettant en œuvre un appareil de classage suivant l'une des revendications 1 à 10, caractérisé par le fait que la conduite d'entrée (3) et la conduite de sortie (4, 4') au pulper primaire (25) sont raccordées à sa cuve principale de brassage et de trituration sans tamis intercalaire.

12. Système de décontamination suivant la revendication 11, caractérisé par le fait que la conduite d'entrée (3) au pulper (25) se trouve à un niveau plus élevé qu'à l'appareil de classage 1.

13. Système de décontamination suivant la revendication 11 ou 12, caractérisé par le fait que la conduite d'entrée (3) sort du pulper primaire (22) essentiellement tangentiellement ou en formant un angle aigu par rapport à la tangente.

14. Système de décontamination suivant l'une des revendications 11 à 13, caractérisé par le fait que la conduite d'entrée (3) et la conduite de sortie (4, 4') sont raccordées au fond ou à proximité du fond du pulper primaire (25).

15. Système de décontamination suivant la revendication 14, caractérisé par le fait que la conduite de sortie (4, 4') de la cuve de brassage (2, 2') débouche dans le pulper (25) à proximité du rotor (26) et que la différence de pression radiale est ainsi utilisée pour l'entraînement du tourbillon dans la cuve de brassage (voir fig. 5).

16. Système de décontamination suivant l'une des revendications 11 à 15, caractérisé par le fait que la conduite d'entrée (3) de l'appareil de classage (2, 2') est raccordée sur celui-ci selon une direction inclinée vers le bas et suivant un angle de plus de 15° par rapport à l'horizontale.

17. Système de décontamination suivant l'une des revendications 11 à 16, caractérisé par le fait que la conduite d'entrée (3) de l'appareil de classage (2, 2') a un diamètre intérieur d'au moins 280 mm.

Fig.2

Fig.1a

Fig.3

Fig.4

Fig.1b

Fig.5